# DEMANDE DE BREVET EUROPEEN

(11) **EP 1 022 412 A1**
(43) Date de publication de la demande: **26.07.2000**
(21) Numéro de dépôt: 00400107.9
(22) Date de dépôt: 17.01.2000
(51) Int. Cl.: E04H 7/18, E04H 12/30, B65D 90/04, B32B 13/12, E04H 7/02

(54) **Réservoir de liquide pourvu d'un revêtement de renforcement et d'étanchéité, et procédé de réalisation.**

(30) Priorité: 19.01.1999 FR 9900495
(71) Demandeur: FREYSSINET INTERNATIONAL STUP, 78140 Vélizy Cedex (FR)
(72) Inventeur: Tourneur, Christian-Jean, 78320 Coignieres (FR); De Pins, Philippe Gaston Bernard, 78000 Versailles (FR); Doghri, Kélil, 92100 Boulogne Billancourt (FR)
(74) Mandataire: Loisel, Bertrand

(57) **Abrégé**

On applique, sur une face interne de la paroi (2) du réservoir (1), un revêtement composite (3) comprenant une résine polymérisable dans laquelle sont noyées d'une part des fibres de renforcement aptes à absorber une partie au moins des efforts hydrostatiques exercés par le liquide (4) sur le réservoir sans les transmettre à la paroi, et d'autre part des fibres d'épaississement conférant au revêtement composite une épaisseur suffisante pour assurer l'étanchéité du réservoir vis-à-vis du liquide. Les fibres d'épaississement ont un module d'élasticité sensiblement plus petit que celui des fibres de renforcement.

## Description

La présente invention concerne la construction ou la réhabilitation de réservoirs de liquide. Elle s'applique notamment, mais non exclusivement, aux réservoirs de châteaux d'eau.

Pour assurer l'étanchéité d'un réservoir de liquide, on utilise le plus souvent un revêtement spécial sur la face interne de la paroi du réservoir. En effet, il est rare que le matériau de cette paroi, généralement du béton, procure à lui seul une étanchéité suffisante. D'autre part, les armatures du béton se corrodent et perdent de leur section, ce qui nécessite des réparations.

Les revêtements d'étanchéité les plus utilisés sont des revêtements minces de type peinture, acrylique ou vinylique ou à base de résine époxydique, des produits bitumineux, des mortiers à base de ciment et des feuilles ou panneaux préfabriqués en aluminium, bitume ou matière plastique (voir 〈〈 Comportement et durabilité des étanchéités des châteaux d'eau, réservoirs, cuves et bassins 〉〉 par G. Mathieu et J. Sari dans la revue Travaux, juillet-août 1991, pages 14-25). On connaît également l'utilisation de revêtements stratifiés à base de résine et de fibres de verre (procédé Max Perlès).

Pour renforcer la structure du réservoir, en particulier lors de réparations consécutives à une perte de section utile des armatures du béton, on utilise différentes techniques courantes du génie civil. Le plus souvent, on réalise un cerclage, précontraint ou non, autour du réservoir. Ce cerclage peut notamment être réalisé avec un matériau composite, tel que des tissus de fibres de carbone collés comme décrit dans la demande de brevet européen 0 799 951. Le cerclage reprend une partie de la pression hydrostatique transmise par la paroi du réservoir, et aide celle-ci à soutenir cette pression. Si le cerclage est précontraint, cette reprise d'effort résulte de la décompression du béton.

Les réparations effectuées sur un ouvrage existant comportent généralement un traitement d'étanchéité et un traitement de renforcement structurel. Avec les techniques employées aujourd'hui, ceci conduit généralement à deux interventions distinctes, l'une à l'intérieur du réservoir et l'autre, particulièrement coûteuse et dangereuse, à l'extérieur. Des considérations analogues s'appliquent à la construction d'un réservoir neuf.

Un but de la présente invention est de faciliter l'exécution de tels travaux, et donc de les rendre plus économiques.

L'invention propose ainsi un procédé de traitement de la paroi d'un réservoir de liquide, dans lequel on applique, sur une face interne de la paroi du réservoir, un revêtement composite comprenant une résine polymérisable dans laquelle sont noyées d'une part des fibres de renforcement aptes à absorber une partie au moins des efforts hydrostatiques exercés par le liquide sur le réservoir sans les transmettre à la paroi, et d'autre part des fibres d'épaississement conférant au revêtement composite une épaisseur suffisante pour assurer l'étanchéité du réservoir vis-à-vis du liquide, les fibres d'épaississement ayant un module d'élasticité sensiblement plus petit que celui des fibres de renforcement.

Le même revêtement assure alors des fonctions d'étanchéité et de renforcement structurel. La membrane d'étanchéité peut reprendre en totalité ou en partie la poussée due à la colonne de liquide contenue dans le réservoir. Les sollicitations de la paroi se trouvent ainsi diminuées, et les éventuelles pertes de résistance de la structure sont compensées par une diminution des efforts auxquels elle est soumise.

On utilise de préférence une résine polymérisable qui fait adhérer le revêtement à la paroi du réservoir. Cette adhérence sert à éviter qu'en cas de perforation accidentelle du revêtement, il se forme entre la paroi et le revêtement une pellicule de liquide qui suffirait à transmettre la pression hydrostatique à la paroi. Contrairement aux techniques de renforcement usuelles, le collage du revêtement selon l'invention n'a pas pour rôle de transmettre les efforts entre la structure et le renfort.

Dans un mode de réalisation avantageux, l'application du revêtement composite comprend l'application d'une première couche composée d'une première résine et d'une partie au moins des fibres d'épaississement, puis l'application d'une seconde couche composée d'une seconde résine et des fibres de renforcement. La seconde résine peut être moins souple que la première résine, ce qui permet au revêtement de s'adapter aux mouvements éventuels dans la paroi du réservoir tout en maintenant une résistance élevée du revêtement aux poussées hydrostatiques.

La résine du revêtement composite est de préférence polymérisable à température ambiante, pour faciliter sa mise en oeuvre. L'application du revêtement composite, ou d'une de ses couches, peut alors comprendre les étapes suivantes :
- enduire la face interne de la paroi du réservoir avec de la résine ;
- appliquer les fibres d'épaississement et les fibres de renforcement sous forme de tissus secs qu'on fait pénétrer dans la résine ;
- laisser polymériser la résine.

Pour l'épaississement du revêtement, on utilise avantageusement des fibres relativement bon marché, pouvant avoir un module d'élasticité et/ou une résistance à la rupture assez médiocres, telles que des fibres de verre ou de polyester.

Les fibres de renforcement sont en un matériau plus résistant (résistance à la rupture typiquement supérieure à 1500 MPa) et de module élastique plus élevé (typiquement entre 200 et 400 GPa). Des fibres de carbone seront généralement utilisées pour cela.

Pour tenir compte de la variation de la pression hydrostatique en fonction de la hauteur dans le réservoir de liquide, on prévoit avantageusement que la densité de fibres de renforcement dans le revêtement composite varie le long de la paroi du réservoir avec une plus grande proportion de fibres de renforcement vers le fond du réservoir.

Le revêtement composite peut comporter au moins un tissu mixte contenant des fibres de renforcement et des fibres d'épaississement et, entre ce tissu mixte et la paroi du réservoir, au moins une couche de fibres d'épaississement.

Un autre aspect de la présente invention se rapporte à un réservoir de liquide comprenant une paroi dont la face interne est recouverte d'un revêtement composite formé d'une résine polymérisable dans laquelle sont noyées d'une part des fibres de renforcement aptes à absorber une partie au moins des efforts hydrostatiques exercés par le liquide sur le réservoir sans les transmettre à la paroi, et d'autre part des fibres d'épaississement conférant au revêtement composite une épaisseur suffisante pour assurer l'étanchéité du réservoir vis-à-vis du liquide, les fibres d'épaississement ayant un module d'élasticité sensiblement plus petit que celui des fibres de renforcement.

D'autres particularités et avantages de la présente invention apparaîtront dans la description ci-après d'exemples de réalisation non limitatifs, en référence au dessin annexé, dans lequel :
- la figure 1 montre schématiquement une section d'un réservoir de château d'eau traité conformément à la présente invention ; et
- la figure 2 est une vue en coupe d'un château d'eau dont le réservoir peut être traité conformément à l'invention.

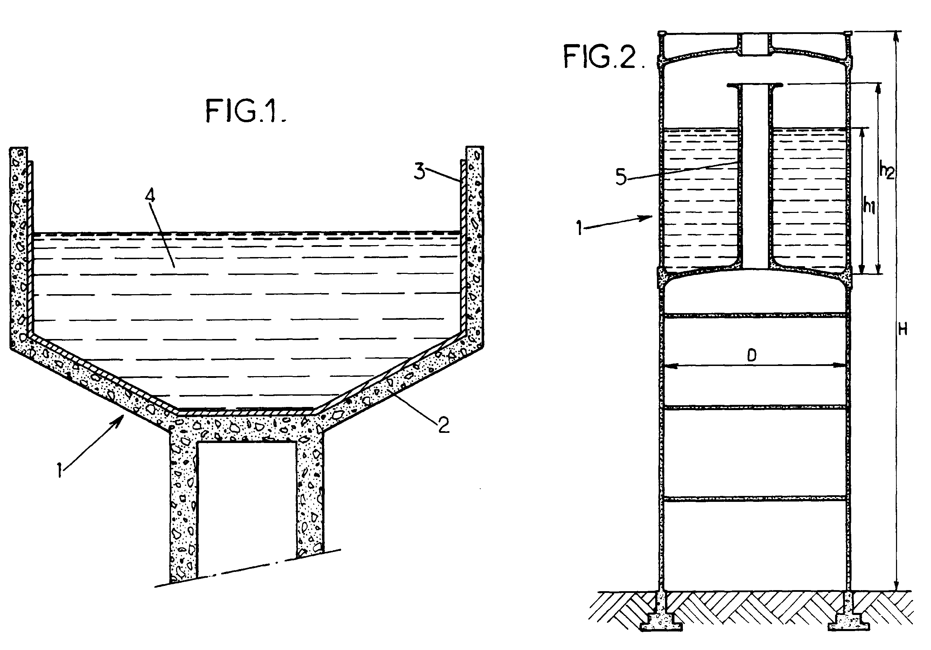

Le réservoir 1 du château d'eau de la figure 1 a une paroi réalisée, par exemple, en béton armé. Sur sa face interne, cette paroi 2 est recouverte par un revêtement composite 3.

Ce revêtement composite 3 est posé de la façon suivante, soit au moment de la construction du réservoir 1, soit lors de travaux de réhabilitation :
- on prépare d'abord la face interne de la paroi en béton 2, mécaniquement et/ou chimiquement (nettoyage, sablage, dégraissage...) ;
- on enduit cette face d'un film mince de résine à l'état fluide ;
- on applique des tissus de fibres secs sur le film de résine encore à l'état fluide ;
- on maroufle ces tissus pour les faire pénétrer dans la résine et les imprégner totalement ;
- et on fait polymériser la résine.

La résine utilisée peut avoir une base époxydique. La résine est thermodurcissable, et prévue pour polymériser à température ambiante. C'est par exemple une résine époxy bi-composants du type mentionné dans la demande de brevet européen 0 799 951. Lorsque le réservoir 1 est destiné à contenir de l'eau potable 4, la résine doit présenter des caractéristiques physico-chimiques compatibles avec le contact avec l'eau potable.

Deux types de fibres sont noyées dans la résine du revêtement composite 3.

Pour reprendre une partie, ou la totalité, des efforts exercés par la colonne de liquide 4, le revêtement composite 3 comporte des fibres de renforcement dont le module d'élasticité est compris entre 200 et 400 GPa et la résistance à la rupture est supérieure à 1500 MPa. Ces fibres peuvent notamment être en carbone avec une résistance à la rupture de l'ordre de 3000 MPa.

Pour tenir compte du gradient de pression hydrostatique dans le liquide, il est prévu que le revêtement 3 comporte une plus grande quantité de fibres de carbone vers le fond du réservoir 1 que vers sa partie supérieure.

Pour chaque ouvrage particulier, la quantité de fibres de renforcement à prévoir sera déterminée en fonction des calculs de mécanique des structures réalisés préalablement aux travaux. La résistance à la rupture du revêtement composite est typiquement de l'ordre de 1500 MPa.

Si le revêtement composite 3 comportait uniquement des fibres de renforcement en carbone ou analogue, son coût serait prohibitif étant donné le prix des tissus de carbone ou analogue. Pour donner au revêtement une épaisseur adéquate au regard de la fonction d'étanchéité, on prévoit d'inclure dans la résine des fibres d'épaississement moins résistantes et de plus faible module d'élasticité, mais nettement meilleur marché. Typiquement, le module d'élasticité des fibres de renforcement peut être plus de deux fois supérieur à celui de ces fibres d'épaississement.

Les fibres d'épaississement peuvent notamment être des fibres de verre, dont le module d'élasticité est de 60 à 80 GPa (la fibre de verre est plus de trente fois meilleur marché que la fibre de carbone).

Les fibres de verre et les fibres de carbone peuvent faire partie d'un même tissu mixte, les fibres de carbone étant judicieusement orientées dans le sens de l'effort pour travailler en traction, c'est-à-dire orientées suivant la circonférence du réservoir. Pour augmenter l'épaisseur finale du revêtement composite et améliorer l'étanchéité, on peut interposer un ou plusieurs autres tissus ou matelas de fibres de verre entre le béton et le tissu mixte.

Ces matelas de fibres de verre peuvent être appliqués en une première couche avec une résine relativement souple afin de s'adapter à des mouvements de la paroi 2, dus par exemple à des fissures. Les fibres de carbone ou le tissu mixte est ensuite appliqué en une seconde couche avec une seconde résine de module élastique plus élevé que la première, afin d'offrir la résistance requise.

L'invention est illustrée numériquement dans le cas d'un réservoir de château d'eau de 600 m³ ayant la forme représentée sur la figure 2. Dans cet exemple, le château d'eau de hauteur H de l'ordre de 30 m comporte un réservoir 1 de forme générale cylindrique de diamètre D environ égal à 10 m, dans lequel est aménagé un puits central 5. On suppose que le réservoir 1, situé en partie haute de l'édifice, est destiné à contenir de l'eau sur une hauteur variant de h₁ ≈ 8 m à h₂ ≈ 10 m. On suppose encore que le béton armé des parois du réservoir présente un déficit d'armature de l'ordre de 20%.

Dans cet exemple, la surface à traiter sur l'intérieur de la paroi du réservoir est de 441 m². Cette surface est d'abord décapée et préparée, puis on lui applique un primaire de fixation du renfort d'étanchéité. Les 4 premiers mètres de paroi verticale à partir du fond du réservoir sont renforcés à l'aide d'un tissu comportant 500 g/m² de fibres de carbone, ce qui représente une surface de 125 m². Le reste de la surface est revêtu d'un tissu comportant 350 g/m² de fibres de carbone (les 6 m verticaux en partie supérieure de la paroi du réservoir soit 188 m², le fond de la cuve soit 77 m², et le puits 5 soit 51 m²). Dans chacun des tissus, les fibres de carbone sont dans le sens trame, et sont tissées avec une chaîne de fibres de verre (densité 150 g/m²). Le tissu est associé à un mat de fibres de verre de densité 450 g/m², la cohésion du tout étant assurée par une poudre d'assemblage (densité 40 g/m²). La masse totale des tissus employés est alors de 456 kg. La masse totale de résine peut être de 803 kg, à savoir 150 kg pour le primaire d'accrochage, 250 kg pour la résine de stratification destinée au tissu à 500 g/m² de fibres de carbone, et 553 kg pour la résine de stratification destinée au tissu à 350 g/m² de fibres de carbone.

Par rapport à une réparation traditionnelle, qui ferait appel d'une part à un revêtement composite interne à base de fibres de verre et de résine époxy et d'autre part à un cerclage externe du réservoir cylindrique, ce système d'étanchéité structurante permet de réaliser des économies importantes, car il supprime les interventions extérieures en grande hauteur. Les quantités de matériaux à mettre en oeuvre à l'intérieur du réservoir sont légèrement supérieures, et le coût de ces matériaux est également supérieur. Toutefois, ce handicap est largement compensé par un gain de main-d'oeuvre important, et un niveau de sécurité accru pour le personnel de chantier.

En outre, cette technique permet de ne pas modifier l'aspect extérieur de l'édifice dans le cas d'une réparation.

## Revendications

1. Procédé de traitement de la paroi (2) d'un réservoir de liquide, caractérisé en ce qu'on applique, sur une face interne de la paroi du réservoir, un revêtement composite (3) comprenant une résine polymérisable dans laquelle sont noyées d'une part des fibres de renforcement aptes à absorber une partie au moins des efforts hydrostatiques exercés par le liquide (4) sur le réservoir (1) sans les transmettre à la paroi, et d'autre part des fibres d'épaississement conférant au revêtement composite une épaisseur suffisante pour assurer l'étanchéité du réservoir vis-à-vis du liquide, les fibres d'épaississement ayant un module d'élasticité sensiblement plus petit que celui des fibres de renforcement.

2. Procédé selon la revendication 1, dans lequel on utilise une résine polymérisable qui fait adhérer le revêtement composite (3) à la paroi du réservoir.

3. Procédé selon la revendication 1 ou 2, dans lequel l'application du revêtement composite (3) comprend l'application d'une premiére couche comprenant une première résine et une partie au moins des fibres d'épaississement, puis l'application d'une seconde couche comprenant une seconde résine et les fibres de renforcement.

4. Procédé selon la revendication 3, dans lequel la seconde résine est moins souple que la première résine.

5. Procédé selon l'une quelconque des revendications 1 à 4, dans lequel la résine du revêtement composite (3) est polymérisable à température ambiante.

6. Procédé selon la revendication 5, dans lequel l'application d'une couche au moins du revêtement composite (3) comprend les étapes suivantes :
- enduire la face interne de la paroi (2) du réservoir avec de la résine ;
- appliquer les fibres d'épaississement et/ou les fibres de renforcement sous forme de tissus secs qu'on fait pénétrer dans la résine ;
- laisser polymériser la résine.

7. Procédé selon l'une quelconque des revendications 1 à 6, dans lequel les fibres de renforcement ont un module d'élasticité plus de deux fois supérieur à celui des fibres d'épaississement.

8. Procédé selon la revendication 7, dans lequel les fibres d'épaississement sont des fibres de verre ou de polyester, et les fibres de renforcement sont des fibres de carbone.

9. Procédé selon l'une quelconque des revendications 1 à 8, dans lequel les fibres de renforcement ont un module d'élasticité compris entre 200 et 400 GPa et une résistance à la rupture supérieure à 1500 MPa.

10. Réservoir de liquide, comprenant une paroi (2) dont la face interne est recouverte d'un revêtement composite (3) formé d'une résine polymérisable dans laquelle sont noyées d'une part des fibres de renforcement aptes à absorber une partie au moins des efforts hydrostatiques exercés par le liquide (4) sur le réservoir (1) sans les transmettre à la paroi, et d'autre part des fibres d'épaississement conférant au revêtement composite une épaisseur suffisante pour assurer l'étanchéité du réservoir vis-à-vis du liquide, les fibres d'épaississement ayant un module d'élasticité sensiblement plus petit que celui des fibres de renforcement.

11. Réservoir selon la revendication 10, dans lequel le revêtement composite (3) adhère à la paroi.

12. Réservoir selon la revendication 10 ou 11, dans lequel les fibres de renforcement ont un module d'élasticité plus de deux fois supérieur à celui des fibres d'épaississement.

13. Réservoir selon l'une quelconque des revendications 10 à 12, dans lequel les fibres d'épaississement sont des fibres de verre ou de polyester.

14. Réservoir selon l'une quelconque des revendications 10 à 13, dans lequel les fibres de renforcement ont un module d'élasticité compris entre 200 et 400 GPa et une résistance à la rupture supérieure à 1500 MPa.

15. Réservoir selon la revendication 14, dans lequel les fibres de renforcement sont des fibres de carbone.

16. Réservoir selon l'une quelconque des revendications 10 à 15, dans lequel la densité de fibres de renforcement dans le revêtement composite (3) varie le long de la paroi (2) du réservoir.

17. Réservoir selon l'une quelconque des revendications 10 à 16, dans lequel le revêtement composite (3) comporte au moins un tissu mixte contenant des fibres de renforcement et des fibres d'épaississement et, entre ce tissu mixte et la paroi (2) du réservoir, au moins une couche de fibres d'épaississement.

18. Réservoir selon l'une quelconque des revendications 10 à 17, comprenant au moins une première couche appliquée sur la face interne de la paroi (2), composée d'une première résine et d'une partie au moins des fibres d'épaississement, et une seconde couche appliquée sur la première couche, composée d'une seconde résine et des fibres de renforcement.

19. Réservoir selon la revendication 18, dans lequel la seconde résine est moins souple que la première résine.
